# EUROPÄISCHE PATENTSCHRIFT

(11) **EP 3 814 720 B1**
(45) Veröffentlichungstag und Bekanntmachung des Hinweises auf die Patenterteilung: **13.03.2024**
(21) Anmeldenummer: 19733476.6
(22) Anmeldetag: 24.06.2019
(51) Int. Cl.: G01C 21/30, G01C 21/36

(54) **LOKALISIERUNGSSYSTEM UND VERFAHREN ZUM BETREIBEN DESSELBEN**
LOCALIZATION SYSTEM AND METHOD FOR OPERATING SAME
SYSTÈME DE LOCALISATION ET PROCÉDÉ POUR FAIRE FONCTIONNER CE DERNIER

(30) Priorität: 29.06.2018 DE 102018210765
(43) Veröffentlichungstag der Anmeldung: 05.05.2021
(73) Patentinhaber: VOLKSWAGEN AKTIENGESELLSCHAFT, 38440 Wolfsburg (DE)
(72) Erfinder: WAPPLER, Stefan, 10717 Berlin (DE); RECH, Bernd, 38556 Bokensdorf (DE)
(86) Internationale Anmeldenummer: PCT/EP2019/066711
(87) Internationale Veröffentlichungsnummer: WO 2020/002261

(56) Entgegenhaltungen:
- WO-A1-2012/111258
- DE-A1-102016 205 867
- DE-B3-102014 002 150

## Beschreibung

Die vorliegende Erfindung betrifft ein Verfahren zum Betreiben eines Lokalisierungssystems, insbesondere in einem Fahrzeug, bei dem Kartendaten bereitgestellt werden, die Positionsdaten für verzeichnete Landmarken umfassen, wobei jeder verzeichneten Landmarke ein Landmarkentyp zugeordnet ist. Es werden Umgebungsdaten erfasst und anhand der Umgebungsdaten werden reale Landmarken detektiert. Anhand der detektierten realen Landmarken und der Kartendaten wird eine Eigenposition bestimmt. Die Detektion der detektierten realen Landmarken erfolgt mittels zumindest eines Detektormoduls, wobei jedes Detektormodul einem Landmarkentyp zugeordnet ist. Die Erfindung betrifft ferner ein Lokalisierungssystem mit einer Kartendaten-Erfassungseinheit zur Erfassung von Kartendaten, wobei die Kartendaten Positionsdaten für verzeichnete Landmarken umfassen, wobei jeder verzeichneten Landmarke ein Landmarkentyp zugeordnet ist, und einer Umgebungsdaten-Erfassungseinheit zur Erfassung von Umgebungsdaten. Das Lokalisierungssystem umfasst ferner eine Recheneinheit, die dazu eingerichtet ist, anhand der Umgebungsdaten reale Landmarken zu detektieren und anhand der detektierten realen Landmarken und der Kartendaten eine Eigenposition zu bestimmen. Die Detektion der realen Landmarken erfolgt mittels zumindest eines Detektormoduls, wobei jedes Detektormodul einem Landmarkentyp zugeordnet ist.

Durch die zunehmende Bedeutung von automatischen Fahrfunktionen bis hin zur vollautomatischen Steuerung eines Fahrzeugs besteht ein Bedarf an verbesserten Verfahren, mit denen die Position eines Fahrzeugs besonders genau und zuverlässig bestimmt werden kann. Insbesondere ist eine Eigenlokalisierung von assistiert oder automatisch fahrenden Fahrzeugen notwendig, um eine weitgehend autonome Steuerung möglich zu machen.

Teilweise oder vollständig automatisch fahrende Fahrzeuge benötigen Informationen über ihren Ort und ihre Pose, um die nächsten Aktionen planen und sicher durchführen zu können. Beispielsweise kann ein Parkhauspilot planen, welche Trajektorie zu einer vorgegebenen Zielparklücke befahren werden soll. Die Ermittlung der eigenen Position beziehungsweise Pose, das heißt der 3D-Koordinate und Orientierung, meist in Form von Nick-, Gier- und Rollwinkel, wird "Lokalisierung" genannt. Hierzu kann beispielsweise ein Satellitennavigationssystem verwendet werden. Allerdings werden auch alternative oder ergänzende Verfahren benötigt, vor allem in geografischen Bereichen, in denen keine GPS- oder vergleichbaren Signale empfangbar sind, etwa in Parkhäusern, und auf Streckenabschnitten, auf denen eine genauere Bestimmung der Pose des Fahrzeugs erforderlich ist, als gebräuchliche Verfahren dies leisten können.

In der DE 10 2013 101 493 A1 wird ein Verfahren zum Betreiben eines Navigationssystems beschrieben, bei dem in der Umgebung des Fahrzeugs optische Informationsmuster von Landmarken erfasst und daraus Positionsdaten der Landmarken erzeugt werden. Beispielsweise kann ein Barcode mit Positionsdaten erfasst werden.

Die EP 2 336 802 A1 schlägt eine verbesserte visuelle Landmarke zur Lokalisierung vor, wobei die Landmarke die Position eines autonomen Fahrzeugs erfasst und ein Signal an dieses überträgt. Dem Fahrzeug kann damit signalisiert werden, wenn es einen vorbestimmten Bereich verlässt.

Das in der DE 694 33 886 T2 beschriebene Verfahren zur Bestimmung der absoluten Fahrzeugposition in einem Navigationssystem sieht vor, dass Störungen eines geomagnetischen Feldsensors durch Landmarken, etwa Tunnel oder geologische Formationen, erkannt werden und eine Einheit zur Koppelnavigation neu kalibriert wird.

In der DE 10 2011 119 762 A1 wird ein Verfahren zur Positionsbestimmung eines Kraftfahrzeugs beschrieben, bei dem in einer digitalen Karte Daten über ortsspezifische Merkmale verzeichnet sind. Es werden Landmarken erfasst und zusammen mit Daten über die Fahrzeugbewegung genutzt, um die Position des Fahrzeugs zu bestimmen.

Das in der DE 10 2009 045 326 A1 vorgeschlagene Verfahren zum Aufbau einer Datenbank zur Positionsbestimmung eines Fahrzeugs mithilfe von natürlichen Landmarken sieht vor, dass Informationen über Landmarken gespeichert werden, wenn sie vor dem Erreichen einer Gefahrenstelle erfasst wurden. Auf diese Weise wird der Speicherbedarf verringert.

Die US 2013/0304383 A1 beschreibt ein Verfahren zur Auswahl von Landmarken zur Navigation, wobei eine Untermenge von zur Verfügung stehenden Landmarken so ausgewählt wird, dass die damit verbundenen Messfehler minimiert werden.

Aus der DE 10 2016 205 867 A1 ist ein Verfahren zur Bestimmung einer Pose eines Fahrzeugs bekannt, wobei ein Detektionsalgorithmus zur Verarbeitung erfasster Landmarkentypen in Abhängigkeit von Umwelteinflüssen ausgewählt wird.

In der WO 2012/111258 A1 wird ein Navigationsverfahren beschrieben, bei dem eine Bilderkennung für ein Markierungsobjekt ausgeführt wird. Dabei wird eine Erkennungssicherheit bestimmt und mit einer Ausgangssituation verglichen. Wenn die Erkennungssicherheit gestiegen ist, wird eine neue Vorlage zur Erkennung des Markierungsobjekts erzeugt.

Bei den bekannten Verfahren sind typischerweise nur wenige, sehr spezielle Typen von Landmarken nutzbar. Erweiterungen für andere Typen von Landmarken sind nur mittels aufwendiger Software-Updates möglich. In Parkhäusern und anderen Parkräumen sind diese Landmarken jedoch häufig nicht oder nur in sehr geringer Dichte verfügbar. Diese Bereiche können daher nicht oder nur eingeschränkt automatisch befahren werden. Insbesondere kann in diesem Fall kein automatisches Parken angeboten werden, sodass der Nutzer einen wesentlichen Komfort vermisst.

Der vorliegenden Erfindung liegt die Aufgabe zugrunde, ein Lokalisierungssystem und Verfahren zum Betreiben desselben bereitzustellen, bei denen eine Lokalisierung möglichst flexibel durchgeführt werden kann und die besonders schnell und komfortabel an unterschiedliche Umgebungsbedingungen angepasst werden können.

Erfindungsgemäß wird diese Aufgabe durch ein Verfahren mit den Merkmalen des Anspruchs 1 und ein Lokalisierungssystem mit den Merkmalen des Anspruchs 12 gelöst. Vorteilhafte Ausgestaltungen und Weiterbildungen ergeben sich aus den abhängigen Ansprüchen.

Das erfindungsgemäße Verfahren der eingangs genannten Art ist dadurch gekennzeichnet, dass anhand der Kartendaten ein neuer Landmarkentyp bestimmt wird, wobei ein Landmarkentyp, der einer verzeichneten Landmarke der Kartendaten zugeordnet ist, als neuer Landmarkentyp bestimmt wird, wenn für diesen Landmarkentyp kein zugeordnetes Detektormodul verfügbar ist, und für den neuen Landmarkentyp werden Deskriptorinformationen bereitgestellt, die ein Muster beschreiben, welches dazu vorgesehen ist, eine reale Landmarke des neuen Landmarkentyps in den Umgebungsdaten zu detektieren. Anhand der Deskriptorinformationen wird ein neues Detektormodul für den neuen Landmarkentyp erzeugt.

Dadurch können vorteilhafterweise auch bisher unbekannte oder generische Landmarkentypen detektiert und zur Lokalisierung verwendet werden. Zum Beispiel können dadurch auch generische Landmarkentypen verwendet werden, die lediglich innerhalb einer bestimmten Umgebung definiert sind, etwa durch einen Parkhausbetreiber.

Der Begriff "Landmarken" umfasst im Sinne der Erfindung Merkmale und/oder Muster in einer Umgebung, die identifiziert werden können und denen eine Ortsinformation zugeordnet werden kann. Dies können beispielsweise charakteristische Punkte oder Objekte sein. Die Landmarken können eine Semantik aufweisen, das heißt sie können als solche auch für die menschliche Wahrnehmung als identifizierbare Objekte oder Merkmale (Features) identifizierbar sein. Ferner sind auch Landmarken umfasst, die keine Semantik aufweisen, sondern beispielsweise abstrakte Muster repräsentieren, die durch eine Mustererkennung detektierbar sind.

Die Zuordnung der Landmarken zu Landmarkentypen kann auf an sich bekannte Weise erfolgen, insbesondere durch eine Kategorisierung anhand geometrischer Eigenschaften oder anhand einer Semantik, die mit den Landmarken verbunden ist. So können beispielsweise Fahrbahnmarkierungen, Pfosten, Schilder, Bauwerke, Elemente einer Vegetation oder Bauwerke von Verkehrsleitsystemen jeweils als ein bestimmter Landmarkentyp zusammengefasst werden. Jede detektierbare reale Landmarke ist einem Landmarkentyp zugeordnet. Dabei entspricht jede verzeichnete Landmarke in den Kartendaten einer realen Landmarke, die demselben Landmarkentyp zugeordnet ist. Eine konkrete Landmarke kann dabei auch mehreren Landmarkentypen zugeordnet sein, beispielsweise einem speziellen und einem allgemeineren Landmarkentyp.

Bei dem erfindungsgemäßen Verfahren beschreiben die Deskriptorinformationen für den neuen Landmarkentyp ein Muster, welches dazu vorgesehen ist, eine reale Landmarke des neuen Landmarkentyps in den Umgebungsdaten zu detektieren. Die Deskriptorinformationen umfassen insbesondere eine mathematisch formulierte Beschreibung zur Erkennung eines Musters, welches eine Landmarke beziehungsweise ein Merkmal der Umgebung in Sensorsignalen, das heißt in den von Sensoren erfassten Umgebungsdaten, erzeugt. Eine solche Beschreibung ist im Allgemeinen sensorspezifisch, sodass sinnvollerweise für die verschiedenen Typen von Fahrzeugsensoren eigene Musterbeschreibungen zur Verfügung gestellt werden können. Beispielsweise unterscheidet sich die Erkennung von Mustern in einem Bild einer optischen Kamera von der Erkennung innerhalb einer Punktwolke, die ein Laserscanner detektiert. Die Muster können geometrische Eigenschaften von Objekten beschreiben, aber auch Materialeigenschaften, wie beispielsweise Reflektanzwerte oder mathematische Funktionen, wie etwa Gradienten von Hell-Dunkel-Übergängen.

Bei dem Verfahren wird ein Detektormodul dazu verwendet, Landmarken eines bestimmten Landmarkentyps mittels der erfassten Umgebungsdaten zu detektieren. In einem weiteren Schritt können dann bestimmte Parameter für eine detektierte Landmarke bestimmt werden, etwa ihre Position und Ausrichtung. Insbesondere ist daher einem Landmarkentyp ein bestimmtes Detektormodul zugeordnet, das zum Detektieren von Landmarken des Landmarkentyps geeignet ist. Bei einem neuen Landmarkentyp, der bei dem Verfahren anhand der Kartendaten bestimmt wird, ist kein geeignetes Detektormodul zur Detektion verfügbar. Insbesondere ist kein aktuelles Detektormodul verfügbar, etwa wenn sich Definitionen bestimmter Landmarkentypen verändern. Zum Beispiel ist ein "neuer Landmarkentyp" im Sinne der Erfindung ein solcher Landmarkentyp, für den aktuell kein zugeordnetes Detektormodul bei dem Lokalisierungssystem verfügbar ist oder dem keines derjenigen Detektormodule zugeordnet ist, die bei dem Lokalisierungssystem verfügbar sind. Das Detektormodul zum Detektieren der Landmarken dieses neuen Landmarkentyps wird daher neu erzeugt.

Bei dem Verfahren wird ein Landmarkentyp, der einer verzeichneten Landmarke der Kartendaten zugeordnet ist, als neuer Landmarkentyp bestimmt, wenn für diesen Landmarkentyp kein zugeordnetes Detektormodul verfügbar ist. Dadurch werden vorteilhafterweise die Detektionsfähigkeiten des Lokalisierungssystems gezielt erweitert.

Insbesondere werden bei dem Verfahren die Landmarkentypen, die in den Kartendaten den verzeichneten Landmarken zugeordnet sind, darauf überprüft, ob ihnen ein bei dem Lokalisierungssystem verfügbares Detektormodul zugeordnet ist. Ist kein geeignetes Detektormodul verfügbar, so wird der Landmarkentyp als "neuer Landmarkentyp" bestimmt.

Insbesondere wird bei dem erfindungsgemäßen Verfahren automatisch erkannt, dass Landmarken eines bestimmten Landmarkentyps nicht detektiert werden können. Es werden entsprechende Deskriptorinformationen angefordert und ein neues Detektormodul wird erzeugt oder ein bestehendes Detektormoduls kann aktualisiert werden. Dies kann beispielsweise dann erfolgen, wenn die Kartendaten einen neue Landmarkentyp umfassen, für den bei dem Lokalisierungssystem aktuell kein geeignetes Detektormodul verfügbar ist, oder wenn Landmarken eines bestimmten Landmarkentyps mit nicht ausreichender Qualität erkannt werden. Ferner können auch Daten über die Erkennungsqualität der Landmarken gespeichert und ausgewertet werden, insbesondere um ein neues, optimiertes Detektormodul zu erzeugen.

Da für einen neuen Landmarkentyp kein geeignetes Detektormodul zum Detektieren anhand der Umgebungsdaten und zum Bestimmen der relativen Position vorhanden ist, erfolgt anhand der Deskriptorinformationen nicht nur eine Neukonfiguration oder Einstellung eines bereits vorhandenen und an sich zur Detektion geeigneten Detektormoduls, sondern dieses wird neu erzeugt. Der neue Landmarkentyp kann folglich mittels der Umgebungsdaten detektiert werden, wenn das neue Detektormodul vorliegt.

Bei einer weiteren Ausführungsform der Erfindung können ergänzende Deskriptorinformationen von einer Bezugsquelle empfangen werden, insbesondere von einer externen Bezugsquelle. Zum Beispiel können die Deskriptorinformationen auch einen Link beziehungsweise eine Information über die Bezugsquelle umfassen. Diese Information kann ferner auf andere Weise bereitgestellt werden, beispielsweise gleichzeitig mit den Deskriptorinformationen, oder sie kann von den Kartendaten umfasst sein. Das Lokalisierungssystem kann von der externen Bezugsquelle ergänzende Deskriptorinformationen empfangen, etwa durch Herunterladen weiterer Daten von einem externen Server oder einer anderen Einrichtung. Bei einem Beispiel wird eine Anforderung an die externe Bezugsquelle gesendet und die ergänzenden Deskriptorinformationen werden anschließend von dieser bereitgestellt.

Bei dem Verfahren gemäß der Erfindung können während des Betriebs des Lokalisierungssystems Deskriptorinformationen für bislang dem System unbekannte Landmarkentypen dynamisch erzeugt, empfangen oder nachgeladen werden. Damit können bislang unbekannte Landmarken für die Lokalisierung genutzt werden. Ein neues Detektormodul zum Detektieren von Landmarken eines bestimmten neuen Landmarkentyps kann beispielsweise im Zuge des Empfangens von Kartendaten einer digitalen Karte erfolgen, etwa einer hochauflösenden HD-Karte zum Beispiel einer Parkeinrichtung, wobei die Deskriptorinformationen Teil der empfangen Kartendaten sind. Ferner kann eine Information über eine Bezugsquelle, etwa ein *Link,* von den Kartendaten umfasst sein oder auf andere Weise bereitgestellt werden, wobei eine Bezugsquelle etwa eine Datenbank, ein Backend etwa eines Herstellers oder eine ähnliche Einrichtung sein kann.

Die auf diese Weise neu erzeugten oder nachgeladenen Deskriptorinformationen sind so gebildet, dass mit ihnen Landmarken eines bislang unbekannten Landmarkentyps detektiert werden können. Solche Deskriptorinformationen umfassen beispielsweise geeignete Informationen, um ein Detektormodul für die von verschiedenen Sensoren erfassten Umgebungsdaten zu erzeugen, beispielsweise für in einem Fahrzeug oder einer mobilen Einheit verfügbare Sensoren wie Kameras, Ultraschall-, Radar- und Lidarsensoren oder weitere Sensoren. Ferner können die Deskriptorinformationen zum Erzeugen eines Detektormoduls für einen spezifischen Sensor oder Sensortyp geeignet sein, etwa mit einem bestimmten physikalischen Detektionsprinzip. Die Deskriptoren sind so gestaltet, dass damit ein Interpreter, der Teil des Lokalisierungssystems ist, die enthaltenen Informationen nutzen kann, um damit einen Detektor zu konstruieren. Diese Konstruktion ist nicht als Erzeugung neuer SoftwareModule gedacht, sondern als eine besondere Instanz innerhalb der bereits vorhandenen Software. Dadurch ist das Lokalisierungssystem flexibel erweiterbar.

Das heißt, das erfindungsgemäße Verfahren geht darüber hinaus, ein bereits vorhandenes Detektormodul für bestimmte Landmarkentypen oder Subtypen von Landmarken anzupassen oder einzustellen, um die Erkennung mittels eines bereits vorhandenen Detektormoduls zu optimieren. Stattdessen wird das Detektormodul neu erzeugt. Insbesondere geht das Verfahren dabei von einem Zustand aus, bei dem das Lokalisierungssystem noch nicht über ein Detektormodul zum Detektieren des bestimmten Landmarkentyps verfügt und ein entsprechend geeignetes Detektormodul wird erst bei dem Verfahren erzeugt. Die bei dem Verfahren genutzten Deskriptorinformationen beschränken sich also nicht auf Informationen über die spezifische Beschaffenheit bekannter Landmarkentypen, für die bereits ein geeignetes Detektormodul verfügbar ist. Vielmehr sind spezifische Informationen über einen neuen Landmarkentyp umfasst. Das erfindungsgemäße Verfahren ist somit besonders flexibel für neuartige Landmarkentypen verwendbar.

Bei einem Beispiel wird ein neuer Landmarkentyp identifiziert, der mittels des Lokalisierungssystems nicht detektierbar ist; zum Beispiel wird geprüft, ob für einen Landmarkentyp, der einer verzeichneten Landmarke in den Kartendaten zugeordnet ist, ein geeignetes Detektormodul verfügbar ist. Ist dies nicht der Fall, so wird automatisch das Verfahren so ausgeführt, dass ein neues Detektormodul erzeugt wird, etwa durch Neubildung durch das Lokalisierungssystem oder durch Nachladen von einer Bezugsquelle. Das Detektormodul ist insbesondere ein Binär-Objekt. Eine Information über die Bezugsquelle kann beispielsweise von den Kartendaten umfasst oder anderweitig empfangen werden; die Bezugsquelle kann etwa eine Datenbank, eine Backend-Einrichtung, ein externer Server oder eine über ein Netzwerk wie das Internet erreichbare Einrichtung sein.

Bei einem weiteren Beispiel wird ein neuer, insbesondere derzeit unbekannter Landmarkentyp identifiziert, etwa anhand des Landmarkentyps, der einer der in den Kartendaten verzeichneten Landmarken zugeordnet ist, und es werden von den Kartendaten umfasste oder von einer anderen Bezugsqualle empfangene Deskriptorinformationen, insbesondere also eine formalmathematische Beschreibung, dazu verwendet, um ein Detektormodul zum Detektieren des neuen Landmarkentyps zu erzeugen beziehungsweise zu instanziieren. Insbesondere wird dabei ein Detektionsprogramm zum Detektieren der Landmarken anhand der Umgebungsdaten nicht neu kompiliert, sondern das Detektormodul wird lediglich als "Interpreter" zusätzlich zu dem an sich unveränderten Detektionsprogramm genutzt, beispielsweise indem das Detektionsprogramm auf das neu erzeugte Detektormodul zugreift.

Die formale Beschreibung eines neuen Landmarkentyps, das heißt die Detektorinformationen für den neuen Landmarkentyp, kann beispielsweise eine Beschreibung einer strukturellen Zusammensetzung von Landmarken des neuen Landmarkentyps umfassen, insbesondere ausgehend von "Primitiven". Beispiele für solche Primitive sind, etwa zur Verwendung mit Umgebungsdaten, die mittels einer Kamera erfasst wurden, Linien, Zylinder, Kugeln, Rechtecke, Punkte oder Kreise. Für Umgebungsdaten, die mittels Lidar erfasst werden, können dies beispielweise Flächen oder Kantenübergänge mit einem bestimmten Winkel, etwa 90°, sein. Für mittels Radar erfasste Umgebungsdaten können zum Beispiel Punkte, Linien oder Kanten beschrieben sein. Weiterhin kann eine von den Deskriptorinformationen umfasste formale Beschreibung weitere Attribute betreffen, etwa Farbe, Reflektivität oder Rückstrahlstärke einer Oberfläche.

Die Detektion der realen Landmarken anhand der Umgebungsdaten kann zumindest teilweise bei einer Vorabverarbeitung durch unterschiedliche Einheiten und Module ausgeführt werden. Diese können etwa in eine Erfassungseinheit, ein Sensormodul oder eine andere Einheit integriert sein oder als eigenständige Einheiten bereitgestellt werden. Beispielsweise kann zur Erfassung der Umgebungsdaten ein Sensormodul verwendet werden, das eine Einheit zur Vorverarbeitung der erfassten Daten umfasst.

Bei der Vorverarbeitung können die Landmarken bereits detektiert werden, um vorverarbeitete Umgebungsdaten so bereitstellen zu können, dass Positionen oder Posen detektierter realer Landmarken dem Lokalisierungssystem direkt zur Verfügung stehen. Auf diese Weise können in modularer Weise praktisch beliebige Sensor- und Detektormodule zur Erfassung der Umgebungsdaten verwendet werden, da die anschließende Auswertung zur Lokalisierung nicht auf die sensorspezifischen Eigenschaften der erfassten Umgebungsdaten abgestimmt sein muss. Insbesondere werden hierfür Detektormodule spezifisch für bestimmte Einheiten zur Vorverarbeitung erzeugt und diesen zur Verfügung gestellt. Der Vorverarbeitungsschritt kann jedoch auch zumindest teilweise von dem Lokalisierungssystem selbst ausgeführt werden.

Bei einer Ausbildung der Erfindung umfassen die verzeichneten Landmarken und/oder die detektierten realen Landmarken Merkmale von Bauwerken, Markierungen auf einer Fahrbahn, eine Verkehrsführungseinrichtung oder einen zweidimensionalen Code umfasst. Beispielsweise können Spurmarkierungen, Abbiegepfeile, Parkplatzmarkierungen oder ähnliche Bodenmarkierungen, Pfosten, Stangen, Säulen, Verkehrs- oder andere Schilder, Signalanlagen oder Ampeln, Gebäudekanten oder -ecken, Rohre, QR- oder Barcodes sowie alphanumerische Darstellungen umfasst sein.

Analog dazu können weitere Merkmale für eine Lokalisierung verwendet werden, die charakteristische, lokalisierbare Punkte in einer geografischen Umgebung der Eigenposition bezeichnen. Im Allgemeinen handelt es sich um Merkmale, die mittels eines Mustererkennungsverfahrens identifiziert und denen Positionsdaten zugeordnet werden können.

Die Erfassung der Umgebungsdaten kann auf unterschiedliche Weisen erfolgen. Bei einer Ausbildung werden die Umgebungsdaten mittels Sensoren eines Fahrzeugs erfasst, insbesondere mittels zumindest optischer, Radar-, Lidar- oder Ultraschallsensoren. Dadurch können vorteilhafterweise vorhandene Einrichtungen des Fahrzeugs genutzt werden, um relevante Umgebungsdaten zu erfassen.

Es wird zwischen verschiedenen Typen von Sensoren unterschieden, wobei ein Sensor eines spezifischen Typs Umgebungsdaten nach einem bestimmten physikalischen Messprinzip erfasst. Beispielsweise sind Radarsensoren Sensoren eines ersten Typs und Ultraschallsensoren Sensoren eines weiteren Typs. Daher kann zudem eine weitere Differenzierung vorgenommen werden, beispielsweise Unterscheidung verschiedener Typen von Radarsensoren, die sich beispielsweise in ihrer Bauweise und/oder einer besonderen Art der Datenverarbeitung voneinander unterscheiden.

Dabei kann insbesondere vorgesehen sein, dass die Deskriptorinformationen spezifisch für bestimmte Typen von Sensoren festgelegt sind, das heißt, dass das Muster derart beschrieben ist, dass eine reale Landmarke des neuen Landmarkentyps in den Umgebungsdaten, die von dem spezifischen Typs erfasst wurden, detektiert werden kann. Dadurch wird berücksichtigt, dass die Erkennung eines Musters anhand von Umgebungsdaten von der Art des Sensors abhängt, durch den diese Umgebungsdaten erfasst wurden. So wird vorteilhafterweise sichergestellt, dass die Detektion der realen Landmarken anhand von Umgebungsdaten unterschiedlicher Sensortypen erfolgen kann.

Die Deskriptorinformationen sind bei einer solchen Ausbildung spezifisch für einen bestimmten Sensor, einen Sensortyp oder ein bestimmtes physikalisches Detektionsprinzip ausgebildet. Das heißt, sie beschreiben einen Landmarkentyp so, dass ein Detektormodul zum Detektieren des Landmarkentyps in Umgebungsdaten von bestimmten Sensoren gebildet werden kann.

Alternativ oder zusätzlich kann vorgesehen sein, dass die Umgebungsdaten mittels einer Schnittstelle von einer externen Einrichtung erfasst werden. Es kann sich dabei beispielsweise um einen fest installierten Sensor zur Verkehrsbeobachtung handeln. Ferner kann ein externer Server verwendet werden, durch den relevante Umgebungsdaten gespeichert und bei Bedarf bereitgestellt werden. Solche Umgebungsdaten können etwa von bestimmten oder einer Vielzahl von Fahrzeugen und Einrichtungen entlang einer Fahrstrecke erfasst und an den Server übertragen werden.

Es wird also zwischen realen Landmarken, die sich in der Umgebung befinden, verzeichneten Landmarken, die innerhalb der Kartendaten mit Positionsdaten gespeichert sind, und tatsächlich detektierten realen Landmarken unterschieden. Die Daten über Landmarken betreffen insbesondere Posen dieser Landmarken, das heißt ihre Position sowie ihre Lage und Ausrichtung relativ zu anderen Landmarken. Beispielsweise kann ein Pfeil in eine bestimmte Richtung im Raum zeigen, ein Pfosten kann eine bestimmte Länge haben und in einem bestimmten Winkel zur Fahrbahn verlaufen oder eine Kante eines Bauwerks kann sich in einer bestimmten Lage relativ zur Fahrbahn befinden.

Die Detektion der realen Landmarken anhand der Umgebungsdaten erfolgt zunächst auf an sich bekannte Weise, insbesondere mittels Mustererkennungsverfahren, mittels derer die Landmarken beispielsweise in Kamerabildern oder Laserpunktwolken erkannt werden können.

Dabei kann optional jeder detektierten realen Landmarke ein Landmarkentyp zugeordnet werden. Es können ferner Positionsdaten für die detektierten realen Landmarken bestimmt werden, wobei insbesondere eine relative Position bestimmt wird. Diese kann sich etwa auf die Positionen anderer detektierter realer Landmarken beziehen oder auf eine Position des Sensors, anhand von dessen Daten die Detektion durchgeführt wird.

Bei dem Verfahren wird eine Eigenposition bestimmt, wobei die anhand der Umgebungsdaten detektierten realen Landmarken und die Kartendaten mit den verzeichneten Landmarken berücksichtigt werden. Die Eigenposition wird insbesondere als relative Position innerhalb einer digitalen Karte oder einem anderen Referenzsystem bestimmt. Dabei können die Positionsdaten der in den Kartendaten verzeichneten Landmarken mit den detektierten realen Landmarken abgeglichen werden. Es kann sich beispielsweise um eine Sensorposition oder die Eigenposition eines Fahrzeugs oder einer Einrichtung handeln, in welcher das Verfahren durchgeführt wird. Dabei kann etwa eine Überlagerung der detektierten realen Landmarken mit den verzeichneten Landmarken vorgenommen werden, wobei die Eigenposition (beziehungsweise die eigene Pose) insbesondere durch ein Optimierungsverfahren bestimmt wird, welches eine optimale Überlagerung der detektierten realen Landmarken mit den verzeichneten Landmarken berechnet.

Bei einer Ausbildung wird das neue Detektormodul so erzeugt, dass reale Landmarken des neuen Landmarkentyps anhand der erfassten Umgebungsdaten detektierbar sind, wobei ein Detektionsprogramm auf das neue Detektionsmodul zugreift. Das Detektionsprogramm braucht daher insbesondere vorteilhafterweise nicht neu kompiliert werden und es kann mittels einer einfachen Instanziierung auf das neue Detektionsmodul zugegriffen werden, um Landmarken des zugeordneten neuen Landmarkentyps anhand der erfassten Umgebungsdaten zu detektieren.

Insbesondere ist ein "Detektormodul" für einen bestimmten Landmarkentyp eine informationstechnische Einheit, mittels derer anhand der erfassten Umgebungsdaten Landmarken des Landmarkentyps detektierbar sind. Die erfindungsgemäß vorgesehenen Detektormodule sind insbesondere als Softwaremodule ausgebildet und können von dem Lokalisierungssystem umfasst sein. Sie sind insbesondere als digitale Strukturen ausgebildet, etwa Einheiten eines Computerprogramms, die eine Detektion der Landmarken anhand der Umgebungsdaten erlauben. Hierzu kann beispielsweise ein Detektionsprogramm auf das Detektormodul zugreifen, ohne dass dieses dafür in das Detektionsprogramm integriert werden muss; in diesem Fall kann auf das Detektormodul als "Interpreter" zugegriffen werden, ohne das eine neue Kompilierung des Detektionsprogramms erforderlich ist. Dies erlaubt hohe Flexibilität beim Einsatz verschiedener Detektormodule und gewährleistet ein hohes Maß an Sicherheit des Systems.

Die Detektormodule sind jeweils einzelnen Landmarkentypen zugeordnet, für deren Detektion sie geeignet sind. Sie können ferner verallgemeinerten Landmarkentypen zugeordnet sein, die mehrere speziellere Landmarkentypen umfassen. Ein Detektormodul kann dabei in einem binären Dateiformat vorliegen, es kann jedoch ferner als Text oder als eigenständig ausführbare Software-Einheit, etwa als App, bereitgestellt werden. Insbesondere kann das Lokalisierungssystem zur Detektion auf unterschiedliche Detektormodule zugreifen, indem es eine Datei in einem bestimmten Dateiformat öffnet und anhand der Datei Informationen erfasst, die eine Detektion eines bestimmten Landmarkentyps erlauben. Insbesondere wird eine Anleitung zur Erkennung eines bestimmten Musters bereitgestellt, die die Detektion eines Landmarkentyps erlaubt.

Bei einer Weiterbildung werden die Kartendaten und/oder die Deskriptorinformationen vor oder beim Erreichen einer bestimmten geografischen Position empfangen. Hierdurch werden vorteilhafterweise die relevanten Daten zur Ausführung des erfindungsgemäßen Verfahrens zeitgerecht bereitgestellt.

Hierzu kann eine datentechnische Verbindung zu einer externen Einrichtung oder einem externen Server aufgebaut werden, wobei insbesondere ein externer Dienst die entsprechenden Daten selbständig oder auf Aufforderung hin bereitstellen kann. Ein solcher Dienst kann beispielsweise als Cloud-Dienst ausgebildet sein. Die Daten können beispielsweise empfangen werden, wenn ein Fahrzeug eine bestimmte geographische Position passiert oder an einer bestimmten Einrichtung vorbeifährt. Sie können etwa beim Einfahren in ein Parkhaus empfangen werden, etwa beim Passieren einer Position vor dem Parkhaus.

Bei einer weiteren Ausbildung können die Kartendaten von einer Speichereinheit gelesen werden. Die Speichereinheit kann insbesondere eine interne Speichereinheit sein, die etwa von einem Fahrzeug umfasst ist, in dem das erfindungsgemäße Verfahren durchgeführt wird. Dadurch kann beispielsweise eine Datenbank mit Kartendaten für verschiedene geografische Bereiche vorgehalten werden, um diese bei Bedarf abrufen zu können.

Bei der Erfindung wird bestimmt, dass die Kartendaten einen bestimmten neuen Landmarkentyp umfassen. Ein "neuer Landmarkentyp" im Sinne der Erfindung kann beispielsweise durch eine Kategorie von Landmarken definiert sein, zu deren Detektion das System über kein geeignetes Detektormodul verfügt. Zum Beispiel können in den Kartendaten Hausecken verzeichnet sein, während das Lokalisierungssystem über kein Detektormodul verfügt, das zur Detektion einer solchen Hausecke geeignet ist. In einem anderen Beispiel können künstliche Landmarken, beispielsweise Symbole einer bestimmten Form, vorgesehen sein, die in den Kartendaten verzeichnet sind und zu deren Detektion das Lokalisierungssystem ein neues Detektormodul benötigt.

Es kann ferner ein Landmarkentyp sein, für den ein verbessertes Detektormodul bereitgestellt werden kann, wobei zum Beispiel verschiedene Versionen eines bestimmten Landmarkentyps vorgesehen sein können.

Bei einer weiteren Ausbildung des Verfahrens wird beim Erzeugen des neuen Detektormoduls ein bereits vorhandenes Detektormodul aktualisiert. Hierdurch kann vorteilhafterweise eine Weiterentwicklung von Detektormodulen implementiert werden. Das bereits vorhandene Detektormodul kann dabei ersetzt werden oder es können mehrere Varianten eines Detektormoduls bereitgestellt werden.

Beispielsweise kann ein Landmarkentyp QR-Codes betreffen, die an bestimmten Positionen angeordnet sind und durch deren Bild eine bestimmte Information kodiert sein kann. Eine solche kodierte Information kann ausgelesen werden und beispielsweise durch ein bestimmtes Datenformat interpretiert und ausgewertet werden. Änderungen der Kodierung oder des Datenformats können beispielsweise mittels eines neuen Landmarkentyp kenntlich gemacht werden, sodass zur Erfassung ein neues Detektormodul vorgesehen ist.

Der neue Landmarkentyp kann ferner ein spezieller Landmarkentyp sein, der zwar derzeit als Landmarke erkannt und einem allgemeineren Landmarkentyp zugeordnet wird, für dessen Abgrenzung gegenüber anderen Landmarken dieses allgemeineren Typs jedoch kein geeignetes Detektormodul vorhanden ist. Beispielsweise kann ein neuer spezieller Landmarkentyp "Pfosten einer Länge zwischen 0,5 und 0,8 m" umfassen, während aktuell lediglich der allgemeine Landmarkentyp "Pfosten" detektiert werden kann.

Der neue Landmarkentyp kann dabei auf unterschiedliche Weise bestimmt werden. Beispielsweise können die Kartendaten eine Information darüber umfassen, dass ein bestimmter Landmarkentyp als "neuer Landmarkentyp" definiert wird. Dies können beispielsweise Landmarken sein, für die vorgesehen ist, dass immer wieder aktualisierte Deskriptorinformationen empfangen werden sollen und ein aktualisiertes Detektormodul erzeugt werden soll. Ferner können die Kartendaten Informationen zu den in ihnen verzeichneten Landmarkentyp umfassen, beispielsweise anhand von Namen, die jeweils einem Landmarkentyp zugeordnet sind. Das Lokalisierungssystem kann diese Namen mit denjenigen vergleichen, für die bereits Detektormodule vorhanden sind. Es können beispielsweise gezielt Deskriptorinformationen zu bestimmten, als neu erkannten Landmarkentypen angefordert werden.

Die Erzeugung eines neuen Detektormoduls anhand von Deskriptorinformationen erfolgt auf an sich bekannte Weise. Beispielsweise können die Deskriptorinformationen an einem bestimmten Speicherort gespeichert werden, an dem das Lokalisierungssystem auf die Informationen mit einer Anleitung zum Erkennen eines bestimmten Landmarkentyps zugreifen kann.

Bei einer Ausführung kann bei der Erzeugung des neuen Detektormoduls auch ein bereits vorhandenes Detektormodul berücksichtigt werden, beispielsweise um dieses zu aktualisieren. Die Deskriptorinformationen können dann als ergänzende Deskriptorinformationen zur Erzeugung eines ergänzten Detektormoduls verwendet werden.

Die bei der Erfindung bereitgestellten Deskriptorinformationen umfassen eine allgemeine formale Beschreibung zu einem Landmarkentyp. Das anhand dieser Deskriptorinformationen erzeugte und bereitgestellte neue Detektormodul erlaubt nun die Identifikation von Landmarken eines neuen Typs. Insbesondere werden auf diese Weise generische Landmarken beziehungsweise Merkmale bereitgestellt und auf ihrer Basis kann ein entsprechendes Detektormodul generiert werden, das vorher noch nicht verfügbar waren. Dieses neue Detektormodul wird nun zur Detektion von Landmarken eines neuesten Landmarkentyps verwendet.

Es kann bei dem Verfahren vorgesehen sein, dass anschließend die Bestimmung der Eigenposition ausschließlich anhand von so generierten neuen Detektormodulen durchgeführt wird. Auf diese Weise kann beispielsweise sichergestellt werden, dass die von dem Positionierungssystem definierten Landmarkentyp werden mit den Definitionen der Kartendaten übereinstimmen, beispielsweise wenn künstliche Landmarken innerhalb einer kontrollierten Umgebung von einer zentralen Stelle definiert werden können beispielsweise innerhalb eines Parkhauses.

Ferner kann das neu erzeugte Detektormodul eine Menge bereits vorhandener Basis-Detektormodule ergänzen, die beispielsweise von einem Fahrzeughersteller im Auslieferungszustand des Lokalisierungssystem angeboten werden. Beispielsweise kann zu einem solchen Basis-Set ein Marker-Detektormodul gehören, das die Nutzung von QR-Codes oder ähnlichen künstlichen Landmarken erlaubt, wobei hierfür insbesondere bestimmte Standards vorgegeben sein können. In weiteren Ausführungen können auch solche Detektionsmodule anhand der empfangenen Deskriptorinformationen erzeugt werden.

Bei einer Ausbildung des Verfahrens sind die Deskriptorinformationen von den Kartendaten umfasst. Alternativ werden die Deskriptorinformationen separat von den Kartendaten, jedoch gleichzeitig mit diesen bereitgestellt. Dadurch liegen vorteilhafterweise sofort alle relevanten Informationen zur optimalen Nutzung der Kartendaten vor.

In diesem Fall wird eine Anleitung zur Generierung der neuen Detektormodule gleichzeitig mit weiteren Kartendaten zur Verfügung gestellt. Hierzu können bereits bekannte Formate für Kartendaten angepasst und ergänzt werden.

In einer weiteren Ausführung werden die Deskriptorinformationen mit entsprechenden Musterbeschreibungen für die am weitesten verbreiteten Sensortypen Kamera, Laserscanner und Radarsensoren bereit gestellt. Die entsprechenden Informationen können in einer Datenstruktur oder in mehreren separaten Datenstrukturen bereitgestellt werden. Auf diese Weise können auch zukünftige, heute noch nicht bekannte oder gebräuchliche Sensortypen berücksichtigt werden, indem mittels der aktualisierten Deskriptorinformationen Anleitungen zur Detektion eines bestimmten Landmarkentyps mittels des neuen Sensortyps bereitgestellt werden.

Die Kartendaten können beispielsweise von einem Server lokal zur Verfügung gestellt werden, wenn oder bevor das Fahrzeug in den entsprechenden Bereich einfährt. Im Falle eines Parkhauses würde das Fahrzeug beispielsweise vor seiner Einfahrt von einem Karten-Server eine Karte zum Parkhaus samt generischen Landmarken und gegebenenfalls Deskriptorinformationen für neue Landmarkentypen erhalten. Das Fahrzeug erzeugt dann solche Detektormodule, die es nicht schon besitzt und die zu seiner Sensorausstattung passen.

Alternativ können Kartendaten und Deskriptorinformationen für generische Landmarken auch getrennt bereitgestellt werden. Das Fahrzeug kann beispielsweise einem Server mitteilen, über welche Detektoren es verfügt und welche Sensorausstattung es besitzt. Der Karten-Server stellt dann nur die relevanten Deskriptorinformationen bereit. Zudem können die Deskriptorinformationen auch bereitgestellt werden, indem ein Link bereitgestellt wird, um ein Herunterladen ergänzender Deskriptorinformationen zu ermöglichen.

Alternativ zum Herunterladen der Deskriptorinformationen kann das System auch so gestaltet sein, dass die Landmarken- bzw. Feature-Detektoren in Form von Apps beziehungsweise ausführbaren Programmeinheiten bestehen, die das Lokalisierungssystem bei Bedarf von bestimmten Bezugsquellen empfängt. Dazu analysiert das Lokalisierungssystem insbesondere die bereitgestellten Kartendaten und prüft, welche Landmarkentypen es nicht kennt, und bezieht die fehlenden Landmarkendetektoren von einer Bezugsquelle.

Dabei wird insbesondere App-Code von einer externen Quelle empfangen und im Fahrzeug ausgeführt. Um dabei sicherheitstechnische Aspekte zu berücksichtigen, können Absicherungsmaßnahmen angewandt werden, um eine solche Kommunikation und die Ausführung der empfangenen Programme abzusichern, etwa mittels eines kryptografischen Verfahrens oder einer Signatur. Eine Absicherung kann beispielsweise dadurch erfolgen, dass ein Referenzmodell für Deskriptorinformationen entwickelt und bereitgestellt wird. In diesem Fall testen beispielsweise sowohl der Anbieter von Kartendaten Deskriptorinformationen und/oder entsprechenden Apps, als auch der Hersteller des Lokalisierungssystems, etwa ein Fahrzeughersteller, gegen dieses Referenzmodell. Alternativ oder zusätzlich können kartografische Verfahren eingesetzt werden.

Bei einer Ausgestaltung des Verfahrens kann als Bezugsquelle ein weiteres Fahrzeug oder ein Netzwerk von Fahrzeugen dienen. Insbesondere kann es sich um Fahrzeuge handeln, die sich bereits innerhalb eines bestimmten Bereichs befinden, für den relevante Deskriptorinformationen bezogen werden sollen, und/oder die die App bereits bezogen haben. Beispielsweise können so Fahrzeuge in einem Parkhaus die für diesen Bereich relevanten Deskriptorinformationen an nachfolgende Fahrzeuge weitergeben. Insbesondere wird hierzu eine Car2Car-Verbindung hergestellt.

Es kann ferner eine App als Binärobjekt empfangen werden, das direkt auf dem Steuergerät des Lokalisierungssystems im Fahrzeug oder zum Beispiel in einer "virtuellen Maschine" ausgeführt werden kann, um damit hohe Portabilität der App sowie mögliche Sicherheitsaspekte zu berücksichtigen.

Bei einer Ausgestaltung des erfindungsgemäßen Verfahrens wird anhand des neuen Detektormoduls eine Landmarke des neuen Landmarkentyps detektiert, wobei Qualitätsprüfungsinformationen erzeugt und ausgegeben werden. Hierdurch kann vorteilhafterweise eine Rückmeldung über eine Qualität der Detektion der Landmarke erfolgen.

Die Ausgabe erfolgt insbesondere durch Senden von Informationen über eine datentechnische Verbindung an eine externe Einheit. Zum Beispiel kann auf an sich bekannte Weise ein statistischer Fehler bei der Detektion einer Landmarke bestimmt werden. Alternativ oder zusätzlich können andere Werte als Maß für eine Qualität der Detektion der Landmarke verwendet werden. Die Qualitätsprüfungsinformationen umfassen insbesondere eine Information darüber, mit welcher Güte beziehungsweise Sicherheit eine Landmarke des neuen Typs detektiert wird.

Beispielsweise kann das Lokalisierungssystem Informationen darüber bereitstellen, wie gut Landmarken des neuen Landmarkentyps anhand eines Detektormoduls detektiert werden können, das anhand der bereitgestellten Deskriptorinformationen erzeugt wurde. Auf diese Weise kann eine Qualitätskontrolle erfolgen, insbesondere um verbesserte Deskriptorinformationen bereitstellen zu können, die eine möglichst gute Detektion der Landmarken eines bestimmten Landmarkentyps erlauben.

Insbesondere kann dabei die Detektion der Landmarken des neuen Landmarkentyps in einem Hintergrund-Modus erfolgen (*Shadowing*), insbesondere zur Evaluation von Deskriptorinformationen und/oder neuen Landmarkentyp. Hierbei kann das Lokalisierungssystem Landmarken des neuen Typs zwar detektieren, es nutzt sie jedoch nicht zur Bestimmung der Eigenposition. Das heißt, die eigentliche Lokalisierung erfolgt weiterhin anhand der bekannten und bewährten Landmarkentypen, während ein Testbetrieb für den neuen Landmarkentyp durchgeführt wird. Dabei kann ferner vorgesehen sein, dass parallel zu dem Bestimmen der Position anhand der bereits bekannten Landmarkentyp im Hintergrund eine weitere Positionsbestimmung mittels der neuen Landmarkentyp durchgeführt wird und ein Vergleich erfolgt. So kann zum Beispiel überprüft werden, ob eine hinreichend genaue und zuverlässige Bestimmung der Eigenposition anhand der Landmarken des neuen Landmarkentyps möglich ist.

Bei einer weiteren Ausbildung werden anhand der Umgebungsdaten und der Positionsinformationen der verzeichneten Landmarken Einzelmessungsdaten für den neuen Landmarkentyp erzeugt und anhand der Einzelmessungsdaten werden die Deskriptorinformationen für den neuen Landmarkentyp erzeugt. Dadurch können die Deskriptorinformationen auf besonders einfache Weise erzeugt und erweitert werden.

In diesem Fall werden die Deskriptorinformationen bereitgestellt, indem sie zunächst anhand der Einzelmessungsdaten erzeugt werden. Beispielsweise können die erfassten Umgebungsdaten in Kombination mit den Kartendaten verwendet werden, um zu ermitteln, wie sich eine Landmarke eines neuen Landmarkentyps in den Umgebungsdaten darstellt und wie daher eine Detektion erfolgen kann.

Dabei können beispielsweise Verfahren des maschinellen Lernens, etwa ein neuronales Netz, eingesetzt werden. Die Erzeugung der Deskriptorinformationen kann durch das Lokalisierungssystem oder durch eine externe Einheit, beispielsweise einen externen Server erfolgen. Es können Einzelmessungsdaten verwendet werden, die beispielsweise mittels verschiedener Sensoren, verschiedene Lokalisierungssysteme oder durch verschiedene Fahrzeuge erfasst wurden.

Insbesondere werden die Deskriptorinformationen zur Mustererkennung in Daten eines bestimmten Sensors oder Sensortyps erzeugt, für den beispielsweise bisher weder ein passendes Detektormodul noch passende Deskriptorinformationen bereitgestellt werden können. In diesem Fall umfassen die Einzelmessungsdaten insbesondere von dem bestimmten Sensor erfasste Daten.

Bei einer Weiterbildung wird anhand der bestimmten Eigenposition eine automatische Steuerung eines Fahrzeugs durchgeführt. Dadurch kann vorteilhafterweise die Steuerung unter optimaler Ausnutzung der verfügbaren Landmarken zur Positionsbestimmung durchgeführt werden. Die automatische Steuerung des Fahrzeugs erfolgt auf an sich bekannte Weise durch Einrichtungen, die eine Längs- und Quersteuerung des Fahrzeugs durchführen. Dabei bestimmt insbesondere eine Planungseinheit eine Zieltrajektorie für das Fahrzeug.

Das erfindungsgemäße Lokalisierungssystem der eingangs genannten Art ist dadurch gekennzeichnet, dass die Recheneinheit ferner dazu eingerichtet ist, anhand der Kartendaten einen neuen Landmarkentyp zu bestimmen, wobei ein Landmarkentyp, der einer verzeichneten Landmarke der Kartendaten zugeordnet ist, als neuer Landmarkentyp bestimmt wird, wenn für diesen Landmarkentyp kein zugeordnetes Detektormodul verfügbar ist. Sie ist ferner dazu eingerichtet, für den neuen Landmarkentyp Deskriptorinformationen zu empfangen, die ein Muster beschreiben, welches dazu vorgesehen ist, eine reale Landmarke des neuen Landmarkentyps in den Umgebungsdaten zu detektieren, und anhand der Deskriptorinformationen ein neues Detektormodul für den neuen Landmarkentyp zu erzeugen.

Das erfindungsgemäße Lokalisierungssystem ist insbesondere ausgebildet, das vorstehend beschriebene erfindungsgemäße Verfahren zu implementieren. Das Lokalisierungssystem weist somit dieselben Vorteile auf wie das erfindungsgemäße Verfahren.

Bei einer Ausbildung des erfindungsgemäßen Lokalisierungssystems umfasst die Umgebungsdaten-Erfassungseinheit zumindest einen Sensor. Der Sensor kann ferner von einem Sensormodul umfasst sein. Dies erlaubt vorteilhafterweise die Erfassung von Sensordaten in der Umgebung. Insbesondere erfolgt die anschließende Detektion der realen Landmarken anhand der Umgebungsdaten mittels eines Detektormoduls, das spezifisch für einen bestimmten Sensortyp oder einem bestimmten Sensor ausgelegt ist. Hierfür können insbesondere spezifische Deskriptorinformationen für bestimmte Sensortypen bereitgestellt werden.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Lokalisierungssystems,
- Figur 2: zeigt beispielhaft einen Kartenausschnitt mit bekannten und neuen Landmarken, und
- Figur 3: zeigt ein Ausführungsbeispiel des erfindungsgemäßen Verfahrens.

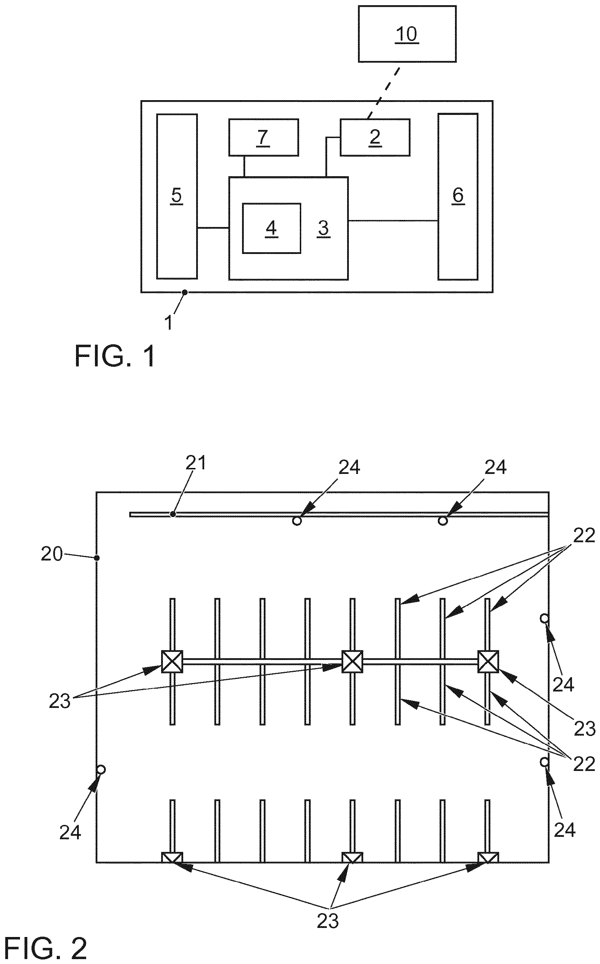

Mit Bezug zu Figur 1 wird ein Ausführungsbeispiel des erfindungsgemäßen Lokalisierungssystems erläutert.

Ein Fahrzeug 1 umfasst ein Steuereinheit 3, die wiederum eine Recheneinheit 4 umfasst. Mit der Steuereinheit 3 sind eine Speichereinheit 7 und Umgebungsdaten-Erfassungseinheiten 5, 6 gekoppelt, wobei letztere mit einer Sensoreinheit vorne 5 und einer Sensoreinheit hinten 6 ausgebildet sind. Ferner ist mit der Steuereinheit 3 eine Kartendaten-Erfassungseinheit 2 gekoppelt, die eine Schnittstelle umfasst, mit der eine datentechnische Verbindung zu einem externen Server 10 herstellbar ist.

Die Sensoreinheiten vorne 5 und hinten 6 sind auf an sich bekannte Weise ausgebildet und umfassen Sensoren zur Erfassung von Umgebungsdaten. Die Sensoren umfassen bei dem Ausführungsbeispiel optische Sensoren, Laserscanner und Radar-Sensoren. Alternativ oder zusätzlich können andere Kombinationen verschiedener Sensortypen eingesetzt werden.

Die datentechnische Verbindung zu dem externen Server 10 wird auf an sich bekannte Weise hergestellt. Hierzu kann beispielsweise ein Mobilfunknetz verwendet werden. Alternativ oder zusätzlich können weitere Netzwerke genutzt werden, beispielsweise das Internet, ein Netzwerk zur Kommunikation von Fahrzeugen mit anderen Fahrzeugen oder weiteren Einrichtungen, etwa Kommunikationseinrichtungen im Bereich einer Straße. Die datentechnische Verbindung kann auch über ein Nutzergerät im Fahrzeug hergestellt werden, beispielsweise über ein Mobiltelefon, das mit der Kartendaten-Erfassungseinheit 2 datentechnisch verbunden ist, beispielsweise durch ein fahrzeuginternes Netzwerk.

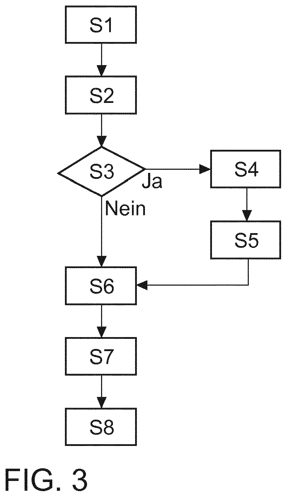

Mit Bezug zu den Figuren 2 und 3 wird ein Ausführungsbeispiel des erfindungsgemäßen Verfahrens erläutert. Dabei wird insbesondere von dem oben mit Bezug zu Figur 1 erläuterten Ausführungsbeispiel des erfindungsgemäßen Lokalisierungssystems ausgegangen.

Der in Figur 2 gezeigte Kartenausschnitt 20 zeigt schematisch eine Anordnung von Landmarken auf einem Parkplatz, wie sie von einer digitalen Karte umfasst sind. Dabei sind bekannte Landmarkentypen 21, 22, 23 sowie ein neuer Landmarkentyp 24 vorhanden. Diese unterscheiden sich dadurch, dass das Lokalisierungssystem für die bekannten Landmarkentypen 21, 22, 23 über entsprechende Detektormodule verfügt, die eine Detektion dieser Landmarken ermöglichen. Für den neuen Landmarkentyp 24 ist zum Ausgangszeitpunkt des Verfahrens kein solches Detektionsmodul verfügbar.

Auf dem Boden sind als bekannte Landmarkentypen Parkplatzmarkierungen 22 und durchgezogene Linien 21 angeordnet. Diese sind bei dem Ausführungsbeispiel als weiße Flächen und Linien auf der dunklen Oberfläche des Parkplatzes ausgebildet. Die Darstellung verschiedener Markierungen kann auch auf andere, an sich bekannte Weise erfolgen, etwa mittels unterschiedlicher Farben oder mittels durchgezogener oder gestrichelter Linien unterschiedlicher Dicke und Länge. Alternativ oder zusätzlich können weitere Fahrbahnmarkierungen vorgesehen sein. Bei dem Ausführungsbeispiel verfügt das Lokalisierungssystem über Detektormodule, die etwa Fahrbahnmarkierungen mit bestimmten geometrischen und optischen Eigenschaften detektieren und voneinander unterscheiden können.

Der Kartenausschnitt 20 umfasst ferner Säulen 23, die ebenfalls einen bekannten Landmarkentyp repräsentieren, das heißt, das Lokalisierungssystem verfügt über ein Detektormodul zur Detektion dieser Landmarken. Durch das Detektormodul werden insbesondere bestimmte Arten von Säulen erkannt, beispielsweise mit einem rechteckigen Querschnitt, einer bestimmten Dicke und einer bestimmten Mindesthöhe.

In dem Kartenausschnitt 20 sind ferner Positionen von Wasserrohren 24 eingezeichnet, die einen neuen Landmarkentyp darstellen. Bei dem Ausführungsbeispiel sind die Wasserrohre dadurch gekennzeichnet, dass sie senkrecht verlaufen, einen runden Querschnitt aufweisen und eine Dicke zwischen 15 und 40 cm haben. In weiteren Ausführungsbeispielen können andere neue Landmarkentypen vorgesehen sein, insbesondere künstliche Landmarken wie bestimmte Markierungen, die durch eine geometrische Form oder andere Merkmale gekennzeichnet sind, Barcodes oder QR-Codes, die zudem eine Information kodieren können, oder auch Muster oder eine semantische Bedeutung, die jedoch mittels einer Mustererkennung detektiert werden können.

Das Ausführungsbeispiel des erfindungsgemäßen Verfahrens folgt im Wesentlichen dem Flussdiagramm, das in Figur 3 dargestellt ist.

In einem ersten Schritt S1 fährt das Fahrzeug 1 in einen bestimmten geografischen Bereich ein. Bei dem Ausführungsbeispiel ist dies ein Einfahrtsbereich eines Parkplatzes. In einem zweiten Schritt S2 erfolgt eine Übertragung von Kartendaten. Bei dem Ausführungsbeispiel verbindet sich das Fahrzeug 1 automatisch mittels der Kartendaten-Erfassungseinheit 2 mit dem externen Server 10, der in dem Ausführungsbeispiel als Kartenserver des Parkplatzes ausgebildet ist. Von diesem externen Server 10 werden Kartendaten an das Fahrzeug 1 übertragen.

In einem weiteren Schritt S3 überprüft das Lokalisierungssystem des Fahrzeugs 1, ob die Kartendaten einen neuen Landmarkentyp umfassen. Wie in Figur 2 dargestellt, ist dies hier der Fall. Das heißt, das Lokalisierungssystem verfügt über kein Detektormodul, das eine Detektion der Wasserrohre 24 erlaubt. In diesem Fall wird das Verfahren daher beim nächsten Schritt S4 fortgesetzt und das Fahrzeug 1 fordert Deskriptorinformationen von dem externen Server 10 an. Insbesondere können spezifische Deskriptorinformationen für bestimmte Sensoren des Fahrzeugs 1 angefordert werden.

Bei weiteren Ausführungsbeispielen kann vorgesehen sein, dass das Fahrzeug 1 eine Verbindung über das Internet und/oder zu einem Cloud-basierten Dienst aufbaut und von diesem entsprechende Kartendaten und Deskriptorinformationen abruft. Andere Arten der Bereitstellung der Kartendaten und Deskriptorinformationen sind möglich, beispielsweise mittels der Speichereinheit 7 des Fahrzeugs 1.

In weiteren Ausführungsbeispielen können bereits die Kartendaten Deskriptorinformationen umfassen oder die Deskriptorinformationen können separat aber gleichzeitig mit den Kartendaten übertragen werden. Es können Deskriptorinformationen für einzelne oder alle von den Kartendaten umfassten Landmarkentyp bereitgestellt werden. In weiteren Ausführungsbeispielen können die Deskriptorinformationen ferner von einer anderen Quelle angefordert oder selbständig bereitgestellt werden, etwa über das Internet und/oder von einem Cloud-basierten Dienst.

In weiteren Ausführungsbeispielen ist vorgesehen, dass die Deskriptorinformationen anhand der von dem Fahrzeug 1 und oder von weiteren Fahrzeugen erfassten Umgebungsdaten erzeugt werden. Die jeweils erfassten Umgebungsdaten repräsentieren dabei Einzelmessungen und können allein oder in Kombination ausgewertet werden. Dies kann beispielsweise anhand eines Maschinenlernverfahrens erfolgen. Es wird zum Beispiel ausgewertet, wo gemäß den Kartendaten eine Landmarke eines neuen Landmarkentyps positioniert ist und es werden die erfassten Umgebungsdaten so ausgewertet, dass ein erkennbares Muster an dieser Position erkannt wird. Dies erfolgt insbesondere anhand von Einzelmessungen für eine Vielzahl von Landmarken des neuen Landmarkentyps an unterschiedlichen Positionen, gegebenenfalls anhand von Messungen verschiedener Fahrzeuge. Im Ergebnis kann dabei eine Anleitung zur Erkennung der Landmarken des neuen Landmarkentyps bereitgestellt werden und es kann in der Folge ein neues Detektormodul erzeugt werden.

In einem Schritt S5 wird ein neues Detektormodul anhand der von dem externen Server 10 bereitgestellten Deskriptorinformationen erzeugt. Dies erfolgt so, dass anhand der Deskriptorinformationen eine mathematische Anleitung erzeugt wird, anhand derer das Lokalisierungssystem Landmarken eines neuen Landmarkentyps detektieren und auswerten kann. Bei dem Ausführungsbeispiel ist das Detektormodul spezifisch für Umgebungsdaten, die mittels eines bestimmten Sensors oder Sensortyps erfasst werden. Insbesondere können Detektormodule für mehrere Sensortypen erzeugt werden.

Bei einem weiteren Ausführungsbeispiel werden die Deskriptorinformationen so bereitgestellt, dass sie bereits selbst als Detektormodule verwendet werden können, etwa weil sie bereits in einem geeigneten Dateiformat bereitgestellt werden. Einem weiteren Ausführungsbeispiel werden für neue Landmarkentypen direkt Detektormodule bereitgestellt, etwa in Form einer App, die das Fahrzeug 1 empfängt und die durch das Lokalisierungssystem als Deskriptorinformationen oder als Detektionsmodul genutzt werden kann.

Bei einem weiteren Ausführungsbeispiel ist als Bezugsquelle ein weiteres Fahrzeug oder ein Netzwerk von Fahrzeugen vorgesehen, die ein Detektormodul oder eine App bereits empfangen haben. Es handelt sich insbesondere um Fahrzeuge, die sich bereits auf dem Parkplatz befinden oder diesen in der Vergangenheit frequentiert haben und welche die relevanten Deskriptorinformationen an andere Fahrzeuge weitergeben können.

Ein Detektormodul kann, insbesondere wenn es als App vorliegt, direkt oder in einer "virtuellen Maschine" ausgeführt werden, um auf diese Weise Portabilität und Sicherheit bei der Ausführung zu gewährleisten.

In einem Schritt S6 werden Umgebungsdaten erfasst. Falls im vorhergehenden Schritt S3 keine neuen Landmarkentypen gefunden werden, wird das Verfahren direkt hier fortgesetzt. Bei dem Ausführungsbeispiel werden die Umgebungsdaten mittels der Umgebungsdaten-Erfassungseinheiten 5, 6 erfasst. Die dabei erfassten Daten werden durch die Recheneinheit 4 verarbeitet und es werden im folgenden Schritt S7 Landmarken detektiert.

Bei der Detektion der Landmarken werden Muster innerhalb der erfassten Umgebungsdaten erkannt. Es werden relativ zur Position des Fahrzeugs 1 Positionen bestimmt, an denen eine Landmarke detektiert wird. Ferner wird der Landmarkentyp einer bestimmten Landmarke bestimmt und es können Eigenschaften der Landmarken, etwa ihre Position und Lage, ihre Pose, geometrische Eigenschaften oder weitere Eigenschaften wie Farbe bestimmt werden.

Im nächsten Schritt S8 wird eine Eigenposition des Fahrzeugs 1 bestimmt. Es handelt sich dabei um eine Position relativ zu dem mit den Kartendaten bereitgestellten Kartenausschnitt 20. Bei dem Ausführungsbeispiel wird ferner die Lage des Fahrzeugs bestimmt, das heißt seine Pose. Diese Bestimmung erfolgt auf an sich bekannte Weise durch einen Abgleich der detektierten Landmarken und der in den Kartendaten verzeichneten Landmarken. Insbesondere wird dadurch die Position und Ausrichtung des Fahrzeugs relativ zu einem Parkplatz bestimmt. In weiteren Ausführungsbeispielen wird eine globale Position innerhalb eines globalen Koordinatensystems bestimmt.

In einem weiteren Schritt S9 erfolgt eine automatische Steuerung des Fahrzeugs 1 zu einem bestimmten Parkplatz, wobei die Längs- und Quersteuerung des Fahrzeugs 1 so gesteuert werden, dass ein sicheres Einparken erfolgt.

Bei einem weiteren Ausführungsbeispiel wird das neue Detektormodul nicht für einen neuen Landmarken Typ erzeugt, sondern ein bestehendes Detektormodul wird aktualisiert. Hierzu können die Deskriptorinformationen beispielsweise in einer verbesserten Weise bereitgestellt werden, sodass ein verbessertes Detektormodul für einen an sich bereits vorher bekannten Landmarkentyp erzeugt werden kann. Auf diese Weise können insbesondere Updates für einen bestimmten Landmarkentyp bereitgestellt werden und/oder es können entsprechende Deskriptorinformationen erzeugt werden.

Bei einem weiteren Ausführungsbeispiel ist vorgesehen, dass vom Fahrzeug 1 erfasste Umgebungsdaten oder anhand dieser Daten erzeugte Übertragungsdaten an den externen Server 10 oder eine andere externe Einheit übertragen werden. Anhand der übertragenen Daten werden weitere geeignete Landmarken, insbesondere neue Landmarkentypen bestimmt. Insbesondere erfolgt dies anhand von Daten, die von verschiedenen Fahrzeugen an den externen Server 10 übertragen werden. Der so bestimmte neue Landmarkentyp kann dann bei der Erzeugung einer aktualisierten Karte berücksichtigt werden.

In einem weiteren Ausführungsbeispiel ist ein Testbetrieb vorgesehen (*Shadowing*), wobei das Lokalisierungssystem zumindest teilweise inaktiv im Hintergrund ausgeführt wird. Dabei werden Landmarken anhand der erfassten Umgebungsdaten detektiert und es wird überprüft, wie gut eine Bestimmung der Eigenposition anhand dieser Landmarken und/oder anderer Landmarken der Kartendaten erfolgen kann. Auf diese Weise kann beispielsweise eine Qualitätskontrolle durchgeführt werden, um beispielsweise in dem Testbetrieb zu überprüfen, mit welcher Qualität die Lokalisierung mittels des neuen Landmarkentyps und die Detektion des neuen Landmarkentyps durchgeführt werden können, oder mit welcher Genauigkeit die Landmarken des neuen Typs erkannt werden können. Das Verfahren kann in diesem Fall auch für andere Anwendungen eines Testbetriebs verwendet werden.

In einem weiteren Ausführungsbeispiel wird bei der Detektion einer Landmarke des neuen Landmarkentyps eine Qualitätsprüfungsinformation erzeugt. Diese kann im Lokalisierungssystem ausgewertet und/oder an eine weitere Einrichtung, etwa den externen Server 10, übertragen werden. Die Bestimmung der Qualitätsprüfungsinformation erfolgt auf an sich bekannte Weise, etwa anhand einer Standardabweichung. Auch hier kann eine Funktionalität einer Qualitätskontrolle implementiert werden.

### Bezugszeichenliste

- 1: Fahrzeug
- 2: Kartendaten-Erfassungseinheit
- 3: Steuereinheit
- 4: Recheneinheit
- 5: Umgebungsdaten-Erfassungseinheit; Sensoreinheit vorne
- 6: Umgebungsdaten-Erfassungseinheit; Sensoreinheit hinten
- 7: Speichereinheit
- 10: Externer Server
- 20: Kartenausschnitt
- 21: Bekannter Landmarkentyp; durchgezogene Linie
- 22: Bekannter Landmarkentyp; Parkplatzmarkierung
- 23: Bekannter Landmarkentyp; Säule
- 24: Neuer Landmarkentyp; Wasserrohr
- S1: Einfahren in geografischen Bereich
- S2: Übertragung von Kartendaten
- S3: Auf neue Landmarkentypen prüfen
- S4: Deskriptorinformationen anfordern
- S5: Neues Detektormodul erzeugen
- S6: Umgebungsdaten erfassen
- S7: Landmarken detektieren
- S8: Eigenposition bestimmen
- S9: Automatische Steuerung des Fahrzeugs

## Patentansprüche

1. Verfahren zum Betreiben eines Lokalisierungssystems, bei dem
Kartendaten bereitgestellt werden, die Positionsdaten für verzeichnete Landmarken (21, 20, 23, 44) umfassen, wobei jeder verzeichneten Landmarke (21, 20, 23, 44) ein Landmarkentyp zugeordnet ist;
Umgebungsdaten bereitgestellt werden;
anhand der Umgebungsdaten reale Landmarken detektiert werden und
anhand der detektierten realen Landmarken und der Kartendaten eine Eigenposition bestimmt wird; wobei
die Detektion der realen Landmarken mittels zumindest eines Detektormoduls erfolgt; wobei
jedes Detektormodul einem Landmarkentyp zugeordnet ist;
**dadurch gekennzeichnet, dass**
anhand der Kartendaten ein neuer Landmarkentyp bestimmt wird, wobei ein Landmarkentyp, der einer verzeichneten Landmarke der Kartendaten zugeordnet ist, als neuer Landmarkentyp bestimmt wird, wenn für diesen Landmarkentyp kein zugeordnetes Detektormodul verfügbar ist;
für den neuen Landmarkentyp Deskriptorinformationen bereitgestellt werden, die ein Muster beschreiben, welches dazu vorgesehen ist, eine reale Landmarke des neuen Landmarkentyps in den Umgebungsdaten zu detektieren; und
anhand der Deskriptorinformationen ein neues Detektormodul für den neuen Landmarkentyp erzeugt wird.

2. Verfahren gemäß Anspruch 1,
**dadurch gekennzeichnet, dass**
die verzeichneten Landmarken (21, 20, 23, 44) und/oder die detektierten realen Landmarken Merkmale von Bauwerken, Markierungen auf einer Fahrbahn, eine Verkehrsführungseinrichtung oder einen zweidimensionalen Code umfassen.

3. Verfahren gemäß einem der vorhergehenden Ansprüche,
**dadurch gekennzeichnet, dass**
die Umgebungsdaten mittels Sensoren (5, 6) eines Fahrzeugs (1) erfasst werden, insbesondere mittels zumindest eines optischen, Radar-, Lidar- oder Ultraschallsensors.

4. Verfahren gemäß Anspruch 3,
**dadurch gekennzeichnet, dass**
die Deskriptorinformationen spezifisch für bestimmte Typen von Sensoren (5, 6) festgelegt sind, das heißt, dass das Muster derart beschrieben ist, dass eine reale Landmarke des neuen Landmarkentyps in den Umgebungsdaten, die von dem spezifischen Typs erfasst wurden, detektiert werden kann.

5. Verfahren gemäß einem der vorhergehenden Ansprüche,
**dadurch gekennzeichnet, dass**
das neue Detektormodul so erzeugt wird, dass reale Landmarken des neuen Landmarkentyps anhand der erfassten Umgebungsdaten detektierbar sind, wobei ein Detektionsprogramm auf das neue Detektionsmodul zugreift.

6. Verfahren gemäß einem der vorhergehenden Ansprüche,
**dadurch gekennzeichnet, dass**
die Kartendaten und/oder die Deskriptorinformationen vor oder bei dem Erreichen einer bestimmten geografischen Position empfangen werden.

7. Verfahren gemäß einem der vorhergehenden Ansprüche,
**dadurch gekennzeichnet, dass**
beim Erzeugen des neuen Detektormoduls ein bereits vorhandenes Detektormodul aktualisiert wird.

8. Verfahren gemäß einem der vorhergehenden Ansprüche,
**dadurch gekennzeichnet, dass**
die Deskriptorinformationen von den Kartendaten umfasst sind.

9. Verfahren gemäß einem der vorhergehenden Ansprüche,
**dadurch gekennzeichnet, dass**
anhand des neuen Detektormoduls eine Landmarke des neuen Landmarkentyps detektiert wird, wobei Qualitätsprüfungsinformationen erzeugt und ausgegeben werden.

10. Verfahren gemäß einem der vorhergehenden Ansprüche,
**dadurch gekennzeichnet, dass**
anhand der Umgebungsdaten und der Positionsinformationen der verzeichneten Landmarken Einzelmessungsdaten für den neuen Landmarkentyp erzeugt werden und anhand der Einzelmessungsdaten die Deskriptorinformationen für den neuen Landmarkentyp erzeugt werden.

11. Verfahren gemäß einem der vorhergehenden Ansprüche,
**dadurch gekennzeichnet, dass**
anhand der bestimmten Eigenposition eine automatische Steuerung eines Fahrzeugs (1) durchgeführt wird.

12. Lokalisierungssystem, umfassend:
eine Kartendaten-Erfassungseinheit (2) zur Erfassung von Kartendaten, wobei die Kartendaten Positionsdaten für verzeichnete Landmarken (21, 20, 23, 44) umfassen, wobei jeder verzeichneten Landmarke (21, 20, 23, 44) ein Landmarkentyp zugeordnet ist;
eine Umgebungsdaten-Erfassungseinheit (5, 6) zur Erfassung von Umgebungsdaten;
eine Recheneinheit (4), die dazu eingerichtet ist:
anhand der Umgebungsdaten reale Landmarken zu detektieren sowie
anhand der detektierten realen Landmarken und der Kartendaten eine Eigenposition zu bestimmen; wobei
die Detektion der realen Landmarken mittels zumindest eines Detektormoduls erfolgt; wobei
jedes Detektormodul einem Landmarkentyp zugeordnet ist;
**dadurch gekennzeichnet, dass**
die Recheneinheit (4) ferner dazu eingerichtet ist, anhand der Kartendaten einen neuen Landmarkentyp zu bestimmen, wobei ein Landmarkentyp, der einer verzeichneten Landmarke der Kartendaten zugeordnet ist, als neuer Landmarkentyp bestimmt wird, wenn für diesen Landmarkentyp kein zugeordnetes Detektormodul verfügbar ist;
für den neuen Landmarkentyp Deskriptorinformationen zu empfangen, die ein Muster beschreiben, welches dazu vorgesehen ist, eine reale Landmarke des neuen Landmarkentyps in den Umgebungsdaten zu detektieren; und
anhand der Deskriptorinformationen ein neues Detektormodul für den neuen Landmarkentyp zu erzeugen.

13. Lokalisierungssystem gemäß Anspruch 12,
**dadurch gekennzeichnet, dass**
die Umgebungsdaten-Erfassungseinheit (5, 6) zumindest einen Sensor umfasst.

## Claims

1. Method for operating a localization system, in which
map data that comprise position data for recorded landmarks (21, 20, 23, 44) are provided, each recorded landmark (21, 20, 23, 44) being associated with a landmark type;
environmental data are provided;
real landmarks are detected based on the environmental data, and
an inherent position is determined based on the detected real landmarks and the map data
the real landmarks being detected by means of at least one detector module;
each detector module being associated with a landmark type;
**characterized in that**
a new landmark type is determined based on the map data, a landmark type associated with a recorded landmark of the map data being determined as a new landmark type if no associated detector module is available for this landmark type;
descriptor information is provided for the new landmark type, which descriptor information describes a pattern provided to detect a real landmark of the new landmark type in the environmental data; and
a new detector module for the new landmark type is generated based on the descriptor information.

2. Method according to claim 1,
**characterized in that**
the recorded landmarks (21, 20, 23, 44) and/or the detected real landmarks comprise features of buildings, markings on a road, a traffic guidance device or a two-dimensional code.

3. Method according to either of the preceding claims,
**characterized in that**
the environmental data are collected by means of sensors (5, 6) of a vehicle (1), in particular by means of at least one optical, radar, lidar or ultrasound sensor.

4. Method according to claim 3,
**characterized in that**
the descriptor information is specifically defined for certain types of sensors (5, 6), that is to say that the pattern is described such that a real landmark of the new landmark type can be detected in the environmental data collected by the specific type of sensor.

5. Method according to any of the preceding claims,
**characterized in that**
the new detector module is generated such that real landmarks of the new landmark type can be detected based on the collected environmental data, a detection program accessing the new detection module.

6. Method according to any of the preceding claims,
**characterized in that**
the map data and/or the descriptor information are received before or upon reaching a particular geographical position.

7. Method according to any of the preceding claims,
**characterized in that**
an already present detector module is updated when generating the new detector module.

8. Method according to any of the preceding claims,
**characterized in that**
the descriptor information is comprised by the map data.

9. Method according to any of the preceding claims,
**characterized in that**
a landmark of the new landmark type is detected based on the new detector module, quality check information being generated and output.

10. Method according to any of the preceding claims,
**characterized in that**
individual measurement data for the new landmark type are generated based on the environmental data and the position information of the recorded landmarks and the descriptor information for the new landmark type is generated based on the individual measurement data.

11. Method according to any of the preceding claims,
**characterized in that**
an automatic control of a vehicle (1) is carried out based on the determined inherent position.

12. Localization system comprising:
a map data collection unit (2) for collecting map data, the map data comprising position data for recorded landmarks (21, 20, 23, 44), a landmark type being associated with each recorded landmark (21, 20, 23, 44);
an environmental data collection unit (5, 6) for collecting environmental data;
a computing unit (4) which is configured to:
detect real landmarks based on the environmental data, and
determine an inherent position based on the detected real landmarks and the map data;
the real landmarks being detected by means of at least one detector module;
each detector module being associated with a landmark type;
**characterized in that**
the computing unit (4) is further configured to determine a new landmark type based on the map data, a landmark type associated with a recorded landmark of the map data being determined as a new landmark type if no associated detector module is available for this landmark type;
receive descriptor information for the new landmark type, which information describes a pattern provided to detect a real landmark of the new landmark type in the environmental data; and
generate a new detector module for the new landmark type based on the descriptor information.

13. Localization system according to claim 12,
**characterized in that**
the environmental data collection unit (5, 6) comprises at least one sensor.

## Revendications

1. Procédé de fonctionnement d'un système de localisation, dans lequel
des données de carte sont fournies, qui comprennent des données de position pour des repères répertoriés (21, 20, 23, 44), dans lequel à chaque repère répertorié (21, 20, 23, 44) est associé un type de repère ;
des données d'environnement sont fournies ;
des repères réels sont détectés à l'aide des données d'environnement et
une position propre est déterminée à l'aide des repères réels détectés et des données de carte ; dans lequel
la détection des repères réels est effectuée au moyen d'au moins un module détecteur ; dans lequel
à chaque module détecteur est associé un type de repère ;
**caractérisé en ce que**
un nouveau type de repère est déterminé à l'aide des données de carte, dans lequel un type de repère, qui est associé à un repère répertorié des données de carte, est déterminé comme nouveau type de repère, lorsqu'aucun module détecteur associé n'est disponible pour ce type de repère ;
des informations de descripteur sont fournies pour le nouveau type de repère, qui décrivent un modèle, qui est prévu pour détecter un repère réel du nouveau type de repère dans les données d'environnement ; et
un nouveau module détecteur est généré à l'aide des informations de descripteur pour le nouveau type de repère.

2. Procédé selon la revendication 1,
**caractérisé en ce que**
les repères répertoriés (21, 20, 23, 44) et/ou les repères réels détectés comprennent des caractéristiques de bâtiments, des marquages sur une chaussée, un dispositif de guidage de trafic ou un code bidimensionnel.

3. Procédé selon l'une des revendications précédentes,
**caractérisé en ce que**
les données d'environnement sont recueillies au moyen de capteurs (5, 6) d'un véhicule (1), en particulier au moyen d'au moins un capteur optique, radar, Lidar ou à ultrasons.

4. Procédé selon la revendication 3,
**caractérisé en ce que**
les informations de descripteur sont spécifiquement définies pour des types déterminés de capteurs (5, 6), c'est-à-dire que le modèle est décrit de sorte qu'un repère réel du nouveau type de repère peut être détecté dans les données d'environnement, qui ont été recueillies du type spécifique.

5. Procédé selon l'une des revendications précédentes,
**caractérisé en ce que**
le nouveau module détecteur est généré de sorte que des repères réels du nouveau type de repère peuvent être détectés à l'aide des données d'environnement recueillies, dans lequel un programme de détection accède au nouveau module de détection.

6. Procédé selon l'une des revendications précédentes,
**caractérisé en ce que**
les données de carte et/ou les informations de descripteur sont reçues avant ou pendant l'arrivée au niveau d'une position géographique déterminée.

7. Procédé selon l'une des revendications précédentes,
**caractérisé en ce que**
lors de la génération du nouveau module détecteur, un module détecteur déjà existant est actualisé.

8. Procédé selon l'une des revendications précédentes,
**caractérisé en ce que**
les informations de descripteur sont comprises dans les données de carte.

9. Procédé selon l'une des revendications précédentes,
**caractérisé en ce que**
un repère du nouveau type de repère est détecté à l'aide du nouveau module détecteur, dans lequel des informations de contrôle qualité sont générées et émises.

10. Procédé selon l'une des revendications précédentes,
**caractérisé en ce que**
des données de mesure individuelles sont générées pour le nouveau type de repère à l'aide des données d'environnement et des informations de position des repères répertoriés et, à l'aide des données de mesure individuelles, les informations de descripteur sont générées pour le nouveau type de repère.

11. Procédé selon l'une des revendications précédentes,
**caractérisé en ce que**
une commande automatique d'un véhicule (1) est réalisée à l'aide de la position propre déterminée.

12. Système de localisation, comprenant :
une unité de recueil de données de carte (2) pour le recueil de données de carte, dans lequel les données de cartes comprennent des données de position pour des repères répertoriés (21, 20, 23, 44), dans lequel à chaque repère répertorié (21, 20, 23, 44) est associé un type de repère ;
une unité de recueil de données d'environnement (5, 6) pour le recueil de données d'environnement ;
une unité de calcul (4), conçue pour :
détecter des repères réels à l'aide des données d'environnement et
déterminer une position propre à l'aide des repères réels détectés et des données de carte ; dans lequel
la détection des repères réels est effectuée au moyen d'au moins un module détecteur ; dans lequel
à chaque module détecteur est associé un type de repère ;
**caractérisé en ce que**
l'unité de calcul (4) est en outre conçue pour déterminer un nouveau type de repère à l'aide des données de carte, dans lequel un type de repère, qui est associé à un repère répertorié des données de carte, est déterminé comme nouveau type de repère, lorsqu'aucun module détecteur associé n'est disponible pour ce type de repère ;
recevoir des informations de descripteur pour le nouveau type de repère, qui décrivent un modèle, qui est prévu pour détecter un repère réel du nouveau type de repère dans les données d'environnement ; et
générer un nouveau module détecteur à l'aide des informations de descripteur pour le nouveau type de repère.

13. Système de localisation selon la revendication 12,
**caractérisé en ce que**
l'unité de recueil de données d'environnement (5, 6) comprend au moins un capteur.
